Europäisches Patentamt

European Patent Office

Office européen des brevets

(19)

(11) Veröffentlichungsnummer : **0 150 339**
**B1**

# (12) EUROPÄISCHE PATENTSCHRIFT

(45) Veröffentlichungstag der Patentschrift :
23.11.89

(51) Int. Cl.⁴ : **A 01 M 29/00**, A 01 M 17/00

(21) Anmeldenummer : 84114746.5

(22) Anmeldetag : 04.12.84

(54) **Vorrichtung zur Schädlingsbekämpfung.**

(30) Priorität : 31.01.84 DE 3403146

(43) Veröffentlichungstag der Anmeldung :
07.08.85 Patentblatt 85/32

(45) Bekanntmachung des Hinweises auf die Patenterteilung : 23.11.89 Patentblatt 89/47

(84) Benannte Vertragsstaaten :
AT BE CH DE FR GB IT LI LU NL SE

(56) Entgegenhaltungen :
EP--A-- 0 042 644
AT--B-- 375 811
DE--A-- 2 352 987
DE--A-- 3 151 008
US--A-- 4 097 838
US--A-- 4 366 562

(73) Patentinhaber : DEKUR Elektronic-Geräte Vertriebs
GmbH

D-5400 Koblenz (DE)

(72) Erfinder : de Kunder, Adriaan
Backesgasse 12
D-5400 Koblenz (DE)

(74) Vertreter : Hentschel, Peter, Dipl.-Ing.
Hohenzollernstrasse 21
D-5400 Koblenz (DE)

EP 0 150 339 B1

## Beschreibung

Die Erfindung betrifft eine Vorrichtung zur Bekämpfung von Maulwürfen, Wühlmäusen mittels Schalls, die in einem hohlen Steckpfahl einen Schwingungserzeuger mit Magnetspule, einen Schwingungsübertrager sowie Steuerelektronik aufweist, wobei der Steckpfahl unten eine Eintreibspitze und oben eine Schutzkappe sowie ggfs. Anschlußelemente für Batterien als Energieversorgungselemente aufweist und der Schwingungserzeuger mit einem Federelement ausgerüstet ist.

Es ist bekannt, Ratten, Mäuse usw. mittels Ultraschall zu bekämpfen. Hierzu werden in den zu schützenden Räumen bzw. oberhalb der zu schützenden Flächen Geräte aufgestellt, die ein Gehäuse aufweisen, in dem auf elektronischem Wege Ultraschall-Schwingungen erzeugt, einem, Lautsprecher zugeführt und von diesem abgestrahlt werden.

Die vorgenannten Ultraschallgeräte sind zur Bekämpfung von Wühlmäusen, Maulwürfen und anderen im Erdboden wühlenden oder nagenden Schädlingen nicht geeignet, weil die Ultraschallschwingungen von den oberirdisch angeordneten Geräten abgestrahlt, von der Erdoberfläche reflektiert werden bzw. nicht in das Erdreich eindringen.

Andererseits verursachen diese Bodenschädlinge oft sehr erheblichen Schaden, sie zerstören Rasenflächen, schädigen Bäume, keimende Aussaat, Jungpflanzen, Stecklinge usw. Dabei ist es für den Berufs- oder Hobbygärtner, für den Besitzer von Freilandflächen, von Eigenheimen u. a. unerheblich, ob der Maulwurf die angelegten Kulturen lediglich durch seine Wühlarbeit schädigt oder ob die Kulturpflanzen, wie bspw. von den Wühlmäusen, Wurzelschäden erleiden. Es ist in jedem Fall nämlich die aufwendige Arbeit zur Anlage der jeweiligen Kultur, der Preis für Samen, Stecklinge o. dgl. verloren, und es sind wichtige Pflanz- und Aufzuchttermine, die ein optimales Gedeihen gewährleisten, verpaßt. Die mit erheblichem Zeitaufwand und zusätzlichem Kostenaufwand neu angelegten Kulturen sind erneut schädlingsgefährdet und bleiben darüber hinaus in ihrer Entwicklung jahreszeitlich zurück, so daß der erwartete Kulturerfolg ausbleibt.

Es ist zwar gemäß DE-A-3 151 008 auch schon bekannt Wühlmäuse und Maulwürfe mit einer Vorrichtung der eingangs genannten Art zu bekämpfen, jedoch hat diese Vorrichtung nur einen Wirkungsbereich von mehreren Metern im Umkreis und die Anwendung von Ultraschall wird lediglich alternativ aufgabenhaft erwähnt, ohne jeglichen Hinweis auf praktische Verwirklichung. Daß ein Gehäuse als Steckpfahl den Schall als sogenannten Körperschall an das umgebende Erdreich überträgt, erhöht nicht den Wirkbereich, weil der beschriebene Schallerreger ein Gewicht bzw. ggf. federbeaufschlagter Spulenkern ist, das auf einen Anschlag, eine Aufprallplatte, fällt. Der Steckpfahl wird daher in seiner Längsrichtung also lotrecht erregt. Die Wirkrichtung ist überwiegend in die Tiefe als in die Breite, d. h. die Umgebung orientiert. Das Gewicht wird elektromotorisch oder -magnetisch angehoben. Das ist mit relativ hohem Energieverbrauch verbunden. Eine Batterie als Stromquelle ist daher in dieser Druckschrift als wirtschaftlich und technisch aufwendig bezeichnet und hat nur geringe Lebensdauer. Aus diesem Grund, sowie auch wegen der sehr geringen Reichweite wird die bekannte Vorrichtung bevorzugt in größerer Zahl in relativ geringen Abständen voneinanderangeordnet und von einer zentralen Steuer- und Versorgungseinheit mittels Kabeln gesteuert mit Energie versorgt. Auch dieses bevorzugte, bekannte Vorgehen ist nachteilig. Kabel sind Stolperfallen. Ein Rasen muß z. B. vor jedem Mähen von der entsprechenden Anzahl der bekannten Vorrichtungen nebst Kabeln geräumt, anschließend wieder mit diesem bestückt werden. Dieses Vorgehen ist extrem aufwendig und nachteilig ; für die Praxis nahezu unbrauchbar.

Die DE-A-2 352 987 offenbart eine ähnliche bekannte Vorrichtung. Ein Kunststoffrohr als Gehäuse, das am oberen Ende eine Schraubkappe hat, die einen Hohlraum für Batterien abschließt, nimmt einen Zeitgeber und am unteren Ende einen Schallgeber auf. Es muß in den Erdboden so eingegraben werden, daß das obere Ende mit der Schraubkappe aus dem Erdboden ragt. Schall wird in Zeitintervallen bei 100 bis 300 Hertz erzeugt, als Schallgeber wird ein Kugellautsprecher vorgeschlagen, dessen Schallwellen über Löcher im Gehäuseboden abstrahlen sollen. Auch diese Ausbildung bevorzugt die Schallwirkrichtung nach unten, wodurch sich ein kleiner Wirkbereich zwingend ergibt. Die Schallübertragung erfolgt auch nicht mittels Körperkontaktes durch Schalleitung, sondern durch das übertragende Medium Luft, ist also ineffektiv.

Obzwar diese bekannte Vorrichtung gemäß aufgabenhafter Offenbarung in der genannten Druckschrift die Körperschallübertragung erwähnt, es soll gegen das Kunststoffgehäuse geklopft werden, ist auch dieser Weg unbefriedigend, weil Kunststoffe, wie sie für Gehäuse der hier vorliegenden Art verwendet werden, relativ schlechte Schallüberträger sind. Aus den Erfahrungen der Ratten- und Mäusebekämpfung in Lagerhallen usw. ist bekannt, daß nagende Schädlinge besonders empfindlich auf Ultraschall reagieren, Schall in diesem Frequenzbereich wird von der bekannten Vorrichtung nicht erzeugt. Die bei der als bevorzugt hervorgehobene Ausführung der Vorrichtung wegen der Schallübertragung mittels Luft unerläßlichen Löcher im Gehäuseboden sind ein schwerwiegender Nachteil für den Einsatzbereich. Muß nämlich mit Wasseranfall wegen Beregnung, bei Schauern usw. gerechnet werden, dann ist diese Vorrichtung nicht einsatzfähig. Durch die Bodenlöcher eindringendes Wasser, ja schon Kondensat von natürlicher Bodenfeuchte sind Gefahren für die Funktionsfähigkeit und Lebensdauer. Die bekannte Vorrichtung ist daher durch sehr begrenzten Flächenwirkbereich, schlecht gewählten Frequenzbereich des Schalls und Empfindlichkeit gegen Nässe nur sehr begrenzt und mit geringem Erfolg einsetzbar.

Ausgehend von diesem bekannten Stand der Technik liegt der Erfindung die Aufgabe zugrunde, eine Vorrichtung der eingangs genannten Art zu schaffen, die es ermöglicht, auf einfache, energiesparende und zuverlässige Weise wühlende und nagende Schädlinge im Erdreich weitreichend zu bekämpfen.

Diese Aufgabe wird bei einem Gerät der eingangs genannten Art gemäß Patentanspruch 1 dadurch gelöst, daß der Steckpfahl als Gehäuse und in Form eines Ultraschallresonanzschwingers als Aluminiumrohr ausgebildet ist, das als Steuerelektronik ein elektronisches Funktionsmodul aufnimmt, daß die an seinem oberen Ende befestigte Schutzkappe als wasserdichter Kopfteil ausgebildet ist, die Batterien sowie einen von außen betätigbaren Schalter aufnimmt, wobei der Schwingungserzeuger innen im unteren Endbereich des Rohres als Federelement eine einendig befestigte, am anderen, in der Ebene der Rohrachse freischwingenden Ende mit einem Permanentmagneten ausgerüstete Blattfeder aufweist, deren freischwingendes Ende in einem Abstand vor einem Pol einer Magnetspule mit Weicheisenkern angeordnet ist, die mittels eines Rückkoppelungsoszillators des Funktionsmoduls mit der bei etwa 400 bis 500 Hz liegenden Resonanzfrequenz der Blattfeder erregbar ist und daß der Rückkoppelungsoszillator mittels eines digital arbeitenden C-MOS-Generators des Funktionsmoduls im Verhältnis von 1 : 8 ein- und ausschaltbar ist.

Die Wirkung, d. h. der Erfolg der erfindungsgemäß ausgebildeten Vorrichtung beruht darauf, daß sich wühlende und nagende Schädlinge im Erdreich vorwiegend nach Geräuschen und Bodenerschütterungen orientieren, weil sie nahezu blind sind. Da es mit der Vorrichtung gelingt, über das Aluminiumrohr intervallartig ein- und ausgeschaltete Schwingungen, die von 400, vorzugsweise 500 Hz, ab ausgehend mittels der Oberwellen bis in den Ultraschallbereich hineinreichen, auf das umgebende Erdreich zu übertragen, wird der Orientierungssinn der Bodenschädlinge gestört, wenn nicht gar durch die Ultraschalleinwirkung lebensgefährdende Schäden an den Wühlmäusen oder Maulwürfen selbst entstehen. Durch den Einsatz der neuen Vorrichtung werden die Kulturen bereits nach kurzer Einsatzzeit schädlingsfrei. Wichtig ist, daß die Vorrichtung andere Bodenlebewesen, insbesondere z. B. Regenwürmer, nicht beeinträchtigt, denn die von der Vorrichtung ausgestrahlten Schwingungen weichen erheblich von den Bodenerschütterungen oder -geräuschen ab, die ein wühlender Maulwurf erzeugt und die Regenwürmer zur Flucht nach oben anregt. Darüber hinaus haben die sehr wichtigen Regenwürmer für ihre Orientierung auf chemischer bzw. Geruchs-Basis arbeitende Sinne, die von den Schwingungen der erfindungsgemäß ausgebildeten Vorrichtung nicht irritiert werden können.

Wichtig für die Wirkung der Vorrichtung ist, daß im Gegensatz zu bekannten Ultraschallgeräten zur Schädlingsbekämpfung kein Lautsprecher verwendet wird, sondern das Gehäuse des gesamten Gerätes als Schwinger bzw. Ultraschallschwinger ausgebildet ist und damit mit seinem Rohr unmittelbar durch Bodenkontakt Schwingungen auf die Umgebung überträgt. Vorteilhaft für die Erregung der Schwingungen des Gehäuses ist, daß der von einer Magnetspule in Resonanzschwingungen versetzte Schwingungserreger, nämlich die einendig freischwingende, anderendig fest eingespannte Blattfeder mit dem Permanentmagneten, in der Nähe oder im unmittelbaren Bereich der unteren Spitze bzw. des unteren Endes des Aluminiumrohres angeordnet ist und ihre Schwingungen auf mechanische Weise, z. B. durch Anschlagen an die Innenwand des Aluminiumrohres auf dieses überträgt. Da bei der Ausgestaltung des Gehäuses als Schall- bzw. Ultraschallschwinger alle Komponenten an der Schwingung mehr oder weniger stark teilnehmen, ist eine Abstimmung der Maße und Massen aufeinander und auf die Erregerfrequenz der Blattfeder von Bedeutung. Der oberirdisch verbleibende Kopfteil des Gehäuses schwingt daher ebenfalls mehr oder weniger stark mit und strahlt seinerseits Schwingungen, ggfs. Ultraschallschwingungen, von oben her ab. Aus dem Erdreich flüchtende Schädlinge werden daher auch oberirdisch durch die von Kopfteil des Gehäuses abgestrahlten Schwingungen vertrieben. Da die Vorrichtungen im Freien eingesetzt werden müssen, ist es von Bedeutung, daß sowohl der Kopfteil des Gehäuses als auch die Verbindung mit dem Aluminiumrohr wasserdicht ausgebildet sind.

Ein weiterer wesentlicher Faktor des erfindungsgemäß ausgebildeten Gerätes besteht im Energieverbrauch. Herkömmliche Ultraschallgeräte zur Schädlingsbekämpfung sind, von Kleingeräten abgesehen, vorwiegend als netzbetriebene Geräte ausgebildet. Bei der erfindungsgemäß ausgebildeten Vorrichtung scheidet ein Netzbetrieb aus und es muß dafür gesorgt werden, daß mit Batteriebetrieb hohe Schallabgabe-Energie mit geringstem Batterieverbrauch erzielt wird. Geringster Energieverbrauch wird dadurch erzielt, daß die Blattfeder von der Magnetspule mit ihrer Resonanzfrequenz erregt wird, so daß an sich nur geringste Energien zur Aufrechterhaltung der Schwingung benötigt werden. Darüber hinaus wird die Arbeitsweise der Schwingungserzeugung noch durch den Permanentmagneten optimiert, der im Sinne der Umpolung der Magnetspule im Wechsel angezogen und abgestoßen wird, so daß sich seine Schwingungsamplitude optimiert, andererseits aber auch eine Art Rückstoßschwingung entsteht, die sich besonders vorteilhaft für die Übertragung auf das Aluminiumrohr eignet.

Ein weiterer Faktor in der Betriebsweise mit geringster Energie besteht darin, daß zur Erregung der Magnetspule im elektronischen Funktionsmodul ein Rückkoppelungsoszillator verwendet wird, der sich gewissermaßen aufgrund der Schwingungen der Blattfeder, aufgrund der Wirkung des Elektromagneten und aufgrund seiner elektronischen Eigenheiten selbst erregt, so daß mit minimalstem Energieaufwand höchste mechanische Schwingungsleistung erreicht wird.

Hinzu kommt, daß das elektronische Funktionsmodul mit einem digital arbeitenden C-MOS-Generator ausgerüstet ist, welcher den Rückkoppelungsoszillator im Verhältnis von 1: 8 ein- und ausschaltet. Durch die intervallartigen Betriebspausen wird während der Pausen Energie gespart, wobei der C-MOS-Generator im Gegensatz zu anderen bekannten elektronischen Schaltkreisen während der Ausschaltzeiten selbst keine Energie aus den Batterien verbraucht, sind andere Intervallschaltkreise Energieverbraucher.

In der Erprobung wurde festgestellt, daß die erfindungsgemäß ausgebildete Vorrichtung aufgrund der Energiesparmaßnahmen bei ihrer Ausgestaltung mit einem Batteriesatz von vier 1,5 V-Mignon-Batterien oder Babyzellen ca. drei Monate zu arbeiten vermag und dabei, je nach Beschaffenheit des Bodens, einen Wirkungsbereich bis 1 000 m² hat.

Um die erfindungsgemäß ausgebildete Vorrichtung bequem auch in hartes Erdreich einstecken zu können, ist gemäß Patentanspruch 2 von besonderem Vorteil, wenn das Aluminiumrohr am unteren Ende spitz verschlossen ist und außen eine von der Spitze bis zum Kopfteil gewindegangartig verlaufende Nut aufweist.

Ein noch besseres Ergebnis wird gemäß Patentanspruch 3 dadurch erzielt, daß in das untere Ende des Aluminiumrohres eine im wesentlichen kegelförmige, korkenzieherartig mit grobem Außengewinde versehene Hart-Kunststoffspitze fest und dicht eingesetzt ist, die am oberen Ende radial über das Aluminiumrohr ragt.

Der Witterungs-, insbesondere Feuchtigkeitssicherheit der erfindungsgemäß ausgebildeten Vorrichtung kommt besondere Bedeutung bei, wobei die Ausgestaltung des Kopfteiles, welches die Batterien aufnimmt, die von Zeit zu Zeit auszuwechseln sind, besonderer Augenmerk beigemessen werden muß. Eine besonders vorteilhafte Lösung offenbar die Weiterbildung der Vorrichtung nach Patentanspruch 4, welche dadurch gekennzeichnet ist, daß der Kopfteil aus einer am oberen Ende des Aluminiumrohres befestigten Bodenschale und einem nach unten glockenförmig erweiterten, oben flach ausgebildeten Deckel besteht, dessen Unterkante den oberen Rand der Bodenschale als Tropfrand nach außen und unten überragt, daß im Rand der Bodenschale Gewindebuchsen für von unten her betätigbare Halteschrauben zur Deckelbefestigung vorgesehen sind, daß Deckel und Bodenschale innen korrespondierende Ausnehmungen sowie eingelassene Kontaktstücke für vier 1,5 V-Baby- oder Mignonzellen aufweisen, und daß der Schalter im oberen flachen Deckelbereich unter einer wasserdicht schließenden flexiblen Kunststoffabdeckung angeordnet ist. Durch die Zweiteilung in Bodenschale und Deckel sind die Batterien leicht zugänglich, durch die glockenförmige Gestaltung des Deckels mit dem unteren Tropfrand wird die Wasserdichtheit erzielt.

Bei der Weiterbildung nach Patentanspruch 5, die dadurch gekennzeichnet ist, daß Deckel und Bodenschale einen kreisförmigen Grundriß aufweisen, über dessen Umfang vier, im Querschnitt jeweils etwa kreisbogenförmige, in Lotrichtung orientierte Einbuchtungen in gleichen gegenseitigen Abständen verteilt sind, wird erreicht, daß sich im Kopfteil vier Ausnehmungen befinden, die beim Versenken des Aluminiumrohres in den Erdboden als Griffschalen dienen und das Einschrauben erheblich erleichtern. Im Betrieb jedoch bilden diese Einbuchtungen lautsprecherartige Schallabstrahlkalotten, die die auf den Kopfteil übertragenen Restschwingungen mit besonderem Vorteil auf die Umgebung abstrahlen.

Bevorzugte Ausführungsbeispiele der erfindungsgemäß ausgebildeten Vorrichtung sind in den Zeichnungen dargestellt. Es zeigt :

Figur 1 eine Schema-Längsschnittansicht der in das Erdreich eingesteckten Vorrichtung,

Figur 2 eine Teil-Seitenansicht des Aluminiumrohres bei einer Ausführungsform der Vorrichtung gemäß Figur 1,

Figur 3 eine Seitenansicht einer weiteren Ausführungsform,

Figur 4 die Draufsicht auf den Kopfteil der Ausführungsform der Vorrichtung gemäß Figur 3,

Figur 5 eine Draufsicht auf die Bodenschale des Kopfteiles gemäß Figur 4 und

Figur 6 den Schaltplan des elektronischen Funktionsmodules der Vorrichtung.

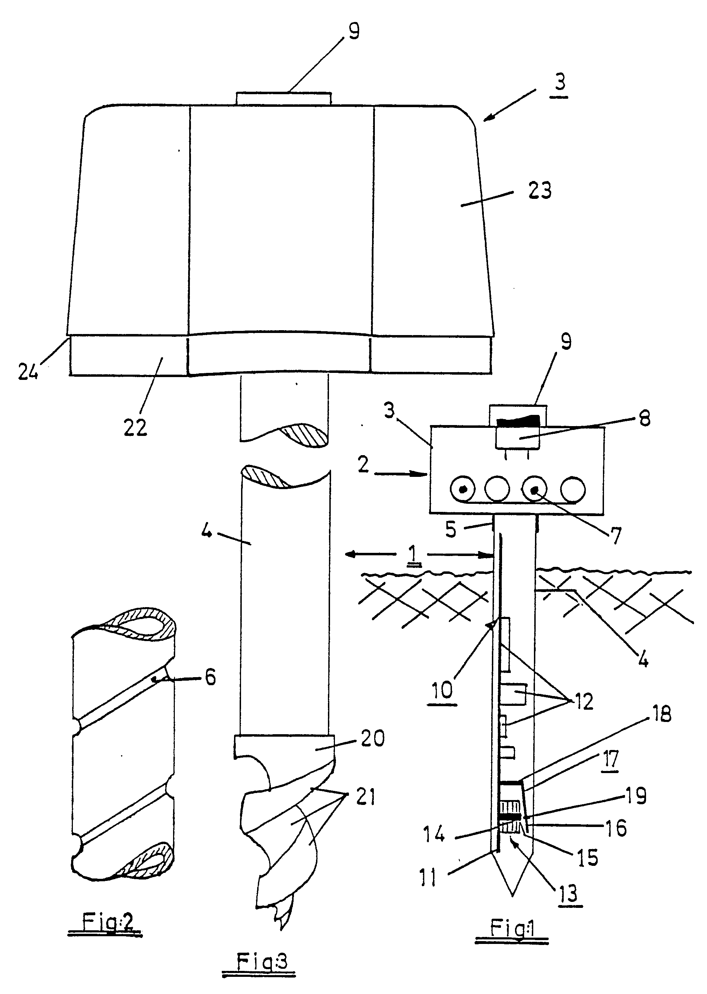

Die Figuren zeigen eine Vorrichtung 1, die zur Bekämpfung von Schädlingen, wie Wühlmäusen, Maulwürfen oder dergleichen dient. Die Vorrichtung 1 hat ein Gehäuse 2, das aus einem Kopfteil 3 und einem Aluminiumrohr 4 besteht. Der Kopfteil 3 besteht aus Kunststoff, hat etwa, bei der Ausführung gemäß Figur 1, die Abmessungen von 80 × 80 mm, während das Aluminiumrohr 4 aus einem besonders schalleitfähigen Aluminium bzw. einer entsprechenden Legierung besteht, einen Außendurchmesser von 20 mm hat und bei der Ausführung gemäß Figur 1 mit einer Aluminiumspitze am unteren Ende verschlossen ist. Eine Muffe 5 verbindet das obere Ende des Aluminiumrohres 4 fest und wasserdicht mit dem Kopfteil 3. Das Aluminiumrohr 4 weist bei der Ausführung gemäß Figur 1 gemäß Figur 2 eine äußere gewindegangartig umlaufende Nut 6 auf, durch welche das Aluminiumrohr 4 in das Erdreich einschraub- bzw. einsenkbar ist. Wie Figur 1 zeigt, soll zwischen der Oberkante des Erdreiches und der Unterkante des Kopfteiles ein Freiraum von etwa 10 cm verbleiben. Die gesamte Länge der Vorrichtung 1 beträgt 280 mm.

Der Kopfteil 3 ist in einer in Figur 1 nicht näher bezeichneten Weise in einen Unter- und Oberteil gegliedert, welche wasserdicht schließend miteinander verbunden sind. Im Unterteil sind vier Batterien 7, bei denen es sich um 1,5 V-Mignon- oder Babyzellen handelt, sicher und fest gelagert.

In der oberen Fläche des Kopfteiles 3 befindet sich ein Schalter 8, der von einer wasserdicht schließenden flexiblen Kunststoffabdeckung 9 allseitig umgeben ist. Der Schalter 8 kann durch die Kunststoffabdeckung 9 hindurch betätigt werden. Er dient zum Ein- und Ausschalten des Gerätes.

Während der Kopfteil 3 nur die Batterien 7 und den Schalter 8 aufnimmt, befindet sich im Aluminiumrohr 4 ein Funktionsmodul 10. Dieser Funktionsmodul 10 weist eine Leiterplatte 11 auf, die auf ihrer Länge elektronische Bauteile 12 trägt und am unteren Ende im Bereich der Spitze des Aluminiumrohres eine Magnetspule 13 mit Weicheisenkern 14 aufweist. An einem Magnetpol 15 dieser Magnetspule 13 ist in einem Abstand das freischwingende Ende 16 einer Blattfeder 17 angeordnet, die mit dem anderen Ende 18 fest eingespannt ist. Die Blattfeder 17 trägt im Bereich des Magnetpoles 15 der Magnetspule 13 einen Permanentmagneten 19. Das freie Ende 16 der Blattfeder 17 schwingt in der Achsebene des Aluminiumrohres 4. Die Resonanzfrequenz der Blattfeder 17 liegt zwischen 400, jedoch vorzugsweise 500 Hz. Die Magnetspule 13 wird mit dieser Resonanzfrequenz von den elektronischen Bauteilen 12 erregt. Auf diese Weise und durch entsprechende Gestaltung der elektronischen Bauteile 12 als Rückkoppelungsoszillator 31 werden die Schwingungen der Blattfeder 17 mit minimalstem Energieverbrauch aufrechterhalten und auf das Aluminiumrohr 4 übertragen. Die elektronischen Bauteile 12 enthalten darüber hinaus einen integrierten Schaltkreis in Gestalt eines C-MOS-Generators 32, der digital arbeitet und der den Rückkoppelungsoszillator 31 im Verhältnis von 1 : 8 ein- und ausschaltet, so daß Funktions- und Ruheintervalle entstehen. Durch diesen Intervallbetrieb wird zusätzlich Energie eingespart.

Die von der Blattfeder 17 erzeugten Schwingungen werden mechanisch auf das untere Ende des Aluminiumrohres 4 übertragen und regen auf diese Weise das gesamte Gehäuse 2 zu Schwingungen an, welche in diesen schwingenden Körper Oberwellen erzeugen, die bis hinauf in den Ultraschallbereich gehen und die, wie aus Figur 1 deutlich ersichtlich ist, unmittelbar auf das umgebende Erdreich übertragen werden. Je nach Bodenbeschaffenheit reicht die Wirkung dieser Schwingungen aus, um eine Fläche von bis zu 1 000 m$^2$ zu beschallen und somit Störschwingungen auf das Erdreich zu übertragen, welche Wühlmäuse, Maulwürfe o. dgl. bekämpfen.

Figur 3 zeigt die Seitenansicht einer bevorzugten Ausführungsform der Vorrichtung 1, bei der das untere Ende des Aluminiumrohres 4 mit einer wasserdicht und fest eingesetzten Hartkunststoffspitze 20 versehen ist, die im wesentlichen kegelförmige ausgebildet ist und korkenzieherartig mit grobem Außengewinde 21 ausgerüstet ist. Das obere breite Ende der Hartkunststoffspitze 20 ragt 1 mm über die Außenkonturen des Aluminiumrohres 4 hinaus, auf der Länge der Hartkunststoffspitze 20 befinden sich eineinhalb grobe Windungen und an der Spitze zwei Feinwindungen. Insgesamt hat die Hartkunststoffspitze 20 eine Länge von 4,5 cm.

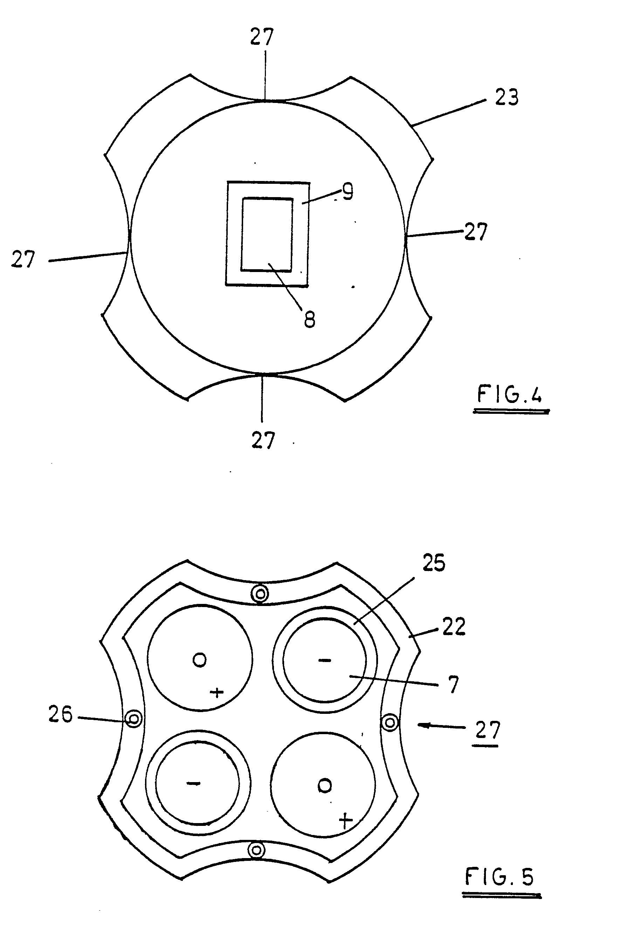

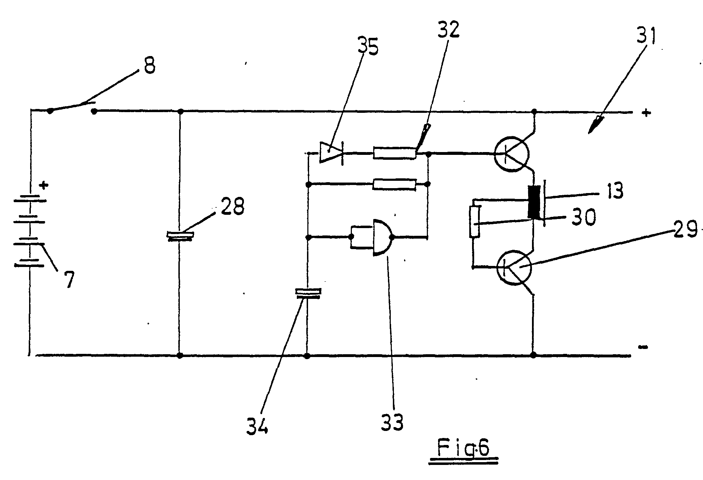

Der Kopfteil 3 besteht aus einer Bodenschale 22 (siehe auch Figur 5) und aus einem glockenförmigen, oben flach ausgebildeten Deckel 23 (siehe auch Figur 4). Die Bodenschale 22 und der Deckel 23 sind im wesentlichen kreisrund ausgebildet, wobei das untere Ende des Deckels 23 den oberen Rand der Bodenschale 22 nach außen und unten unter Bildung einer Tropfkante 24 überragt. Im flachen Oberteil des Deckels 23 befinden sich die schon gemäß Figur 1 erwähnten Bauteile, nämlich die flexible, wasserdicht abschließende Kunststoffabdeckung 9 und der elektrische Schalter 8.

In der Bodenschale 22 sind Vertiefungen 25 eingeformt, denen äquivalente korrespondierende Vertiefungen im Deckel 23 gegenüberstehen und die zur Aufnahme der Batterien 7 dienen. Die entsprechenden Kontaktstücke, leitenden Verbindungen usw. sind in Bodenschale 22 bzw. Deckel 23 eingelassen.

Bei dem in Figur 5 gezeigten Beispiel hat die Bodenschale 5 vier Gewindebuchsen 26 im Rand eingelassen, die zur Aufnahme von nicht gezeigten Befestigungsschrauben dienen, die von unten her betätigbar sind und zur Festlegung des Deckels 23 dienen. Dabei kann zwischen Bodenteil 22 und Deckel 23 eine nicht gezeigte Dichtung vorgesehen sein.

Bodenschale 22 und Deckel 23 haben seitlich vier über den Kreisumfang gleichmäßig verteilte, im Querschnitt kreisförmige Einbuchtungen 27, die sich lotrecht von unten nach oben erstrecken. Diese kreisbogenförmig begrenzten Einbuchtungen 27 dienen einerseits als Griffhilfen beim Einschrauben des Aluminiumrohres 4, sie können aber andererseits als Schallabstrahlkalotten wirken und Schwingungen, die aus dem Aluminiumrohr 4 in den Kopfteil 3 übertragen werden, bevorzugt auf den oberhalb des Erdreichs liegenden Bereich abstrahlen.

Auch bei der Ausführung gemäß Figur 3 bis 5 besteht das Gehäuse aus Kunststoff.

Figur 6 zeigt einen Schaltplan des elektronischen Funktionsmodules 10. An die in Reihe geschalteten Batterien 7 ist an der Plusseite der Schalter 8 angeschlossen, an der Minusseite läuft der Minusleiter. Zunächst liegt an der Spannung der in Reihe geschalteten Batterien 7 ein Kondensator 28 von vorzugsweise 0,47 uF, der mit zwei Transistoren 29 sowie der zwischen beide Transistoren geschalteten Magnetspule 13 sowie einem zugehörigen Widerstand 30, einen Rückkoppelungsoszillator 31 bildet. Zugeordnet ist der Basis des ersten Transistors 29 ein integrierter elektronischer Schaltkreis 32, ein sog. digital arbeitender C-MOS-Generator mit einem Gatter 33, einem Kondensator 34 und einem Gleichrichter 35, welche über entsprechende Widerstände derart arbeiten, daß sie den Rückkoppelungsoszillator 31 im Verhältnis von 1 : 8 intervallartig ein- und ausschalten. Da durch diesen C-MOS-Generator die Basis des ersten Transistors 29 gesperrt wird, über den Gleichrichter 35 kein Strom fließen kann und das Gatter 33 eine Potentialumkehrung bewirkt, kann während der Ausschaltphase kein Batteriestrom verbraucht werden. Diese Schaltung des elektronischen Funktionsmoduls ist maßgebend für die lange Betriebszeit der Batterien 7.

Alle in der Beschreibung und/oder den Zeichnungen dargestellten Einzel- und Kombinationsmerkmale werden als erfindungswesentlich angesehen.

## Patentansprüche

1. Vorrichtung zur Bekämpfung von Maulwürfen, Wühlmäusen mittels Schalls, die in einem hohlen als Gehäuse ausgebildeten Steckpfahl einen Schwingungserzeuger mit Magnetspule, einen Schwingungsübertrager sowie Steuerelektronik aufweist, wobei der Steckpfahl unten eine Eintreibspitze und oben eine an seinem oberen Ende befestigte Schutzkappe sowie ggfs. Anschlußelemente für Batterien als Energieversorgungselemente aufweist und der Schwingungserzeuger mit einem Federelement ausgerüstet ist, dadurch gekennzeichnet, daß der Steckpfahl in Form eines Ultraschallresonanzschwingers als Aluminiumrohr (4) ausgebildet ist, das als Steuerelektronik ein elektronisches Funktionsmodul (10) aufnimmt, daß die Schutzkappe als wasserdichter Kopfteil (3) ausgebildet ist, die Batterien (7) sowie einen von außen betätigbaren Schalter (8) aufnimmt, wobei der Schwingungserzeuger innen im unteren Endbereich des Rohres (4) als Federelement eine einendig befestigte, am anderen, in der Ebene der Rohrachse freischwingenden Ende (16) mit einem Permanentmagneten (19) ausgerüstete Blattfeder (17) aufweist, deren freischwingendes Ende (16) in einem Abstand vor einem Pol (15) einer Magnetspule (13) mit Weicheisenkern (14) angeordnet ist, die mittels eines Rückkoppelungsoszillators (31) des Funktionsmoduls (10) mit der bei etwa 400 bis 500 Hz liegenden Resonanzfrequenz der Blattfeder (17) erregbar ist und daß der Rückkoppelungsoszillator (31) mittels eines digital arbeitenden C-MOS-Generators (32) des Funktionsmoduls (10) im Verhältnis von 1 : 8 ein- und ausschaltbar ist.

2. Vorrichtung nach Anspruch 1, dadurch gekennzeichnet, daß das Aluminiumrohr (4) am unteren Ende spitz verschlossen ist und außen eine von der Spitze bis zum Kopfteil gewindegangartig verlaufende Nut aufweist.

3. Vorrichtung nach Anspruch 1, dadurch gekennzeichnet, daß in das untere Ende des Aluminiumrohres (4) eine im wesentlichen kegelförmige, korkenzieherartig mit grobem Außengewinde (21) versehene Hart-Kunststoffspitze (20) fest und dicht eingesetzt ist, die am oberen Ende radial über das Aluminiumrohr (4) ragt.

4. Vorrichtung nach Anspruch 1 bis 3, dadurch gekennzeichnet, daß der Kopfteil (3) aus einer am oberen Ende des Aluminiumrohres (4) befestigten Bodenschale (22) und einem nach unten glockenförmig erweiterten, oben flach ausgebildeten Deckel (23) besteht, dessen Unterkante den oberen Rand der Bodenschale als Tropfrand (24) nach außen und unten überragt, daß im Rand der Bodenschale (22) Gewindebuchsen (26) für von unten her betätigbare Halteschrauben zur Deckelbefestigung vorgesehen sind, daß Deckel (23) und Bodenschale (22) innen korrespondierende Ausnehmungen (25) sowie eingelassene Kontaktstücke für vier 1,5 V-Baby- oder Mignonzellen (7) aufweisen, und daß der Schalter (8) im oberen flachen Deckelbereich unter einer wasserdicht schließenden flexiblen Kunststoffabdeckung (9) angeordnet ist.

5. Vorrichtung nach Anspruch 1 bis 4, dadurch gekennzeichnet, daß Deckel (23) und Bodenschale (22) einen kreisförmigen Grundriß aufweisen, über dessen Umfang vier im Querschnitt jeweils etwa kreisbogenförmige, in Lotrichtung orientierte Einbuchtungen (27) in gleichen gegenseitigen Abständen verteilt sind.

## Claims

1. Device for combatting moles and voles by means of sound, comprising in a hollow, case-like stick pole a vibration generator with a magnetizing coil, a vibration transmitter as well as an electronic control means, whereby said stick pole is provided at the bottom with a tapered cone and on top with a protecting cap fastened to his upper end as well as, if necessary, with connecting members for accommodating batteries as power supply members, and said vibration transmitter is equipped with a spring element, characterized in that said stick pole is developed in form of an ultrasonic resonance vibrator as an aluminium pipe (4) accommodating as an electronic control means an electronic operational module (10), said protecting cap is formed as a watertight head part (3), taking up said batteries (7) as well as a switch (8) externally actuable, whereby said vibration generator internally comprises in the lower final portion of said aluminium pipe (4) as spring element a leaf spring (17) equipped with a permanent magnet (19) and fixed at its one end as well as freely swinging at the other end in the plane of the pipe axis, whereby the freely swinging end (16) is arranged by a distance in front of a pole (15) of a magnetizing coil (13) with a soft-iron core, being excitable by means of a feedback oscillator (31) of said operational module (10) with the natural frequency of said leaf spring (17) varying nearly between 400 and 500 Hz, and that said feedback oscillator (31) is switched off and on by means of a digitally working C-MOS-generator (32) of said operational module (10) in the ratio of 1 to 8.

2. Device according to claim 1, characterized in that said aluminium pipe (4) is closed by a tip at its lower end and externally provided with a groove running from said tip to said head part (3) like a thread.

3. Device according to claim 1, characterized in that a tip (20) made from hard synthetic material and being essentially of a tapered corkscrew-like form and provided with a coarse external thread (21) is closely fitted into said lower end of the aluminium pipe (4), whereby said tip (20) radially projects the upper end of said aluminium pipe (4).

4. Device according to claim 1 to 3, characterized in that said head part (3) consists of a bottom basin (22) fixed at the upper end of said aluminium pipe (4) and of a cover (23) being downwardly enlarged like a bell and upwardly flattened, the lower edge of which exceeds externally and downwardly as a drip rim (24) the upper rim of said bottom basin (22), said rim of said bottom basin (22) is provided with threaded bushes (26) for holding screws actuable from the bottom to fasten the cover (23), said cover (23) and said bottom basin (22) have recesses (25) internally corresponding to each other as well as embedded contact pieces for accommodating four 1,5 V of R 14 and R 6 round celles (7), and said switch (8) in the upper flat cover region is arranged below a water tight closing cover (9) made of flexible synthetic material.

5. Device according to claim 1 to 4, characterized in that said cover (23) and said bottom basin (22) show a circular ground plan on whose circumference are arranged four vertically oriented recesses (27) exhibiting each in cross-section nearly circular-arc shape, whereby the recesses (27) are distributed in equal opposing distances.

**Revendications**

1. Installation servant à combattre les taupes et les fouisseurs à l'aide du son, contenant dans un pal creux servant d'abri un générateur d'oscillations à bobine d'électro-aimant, un transformateur d'oscillation ainsi que l'électronique de commande, le pal ayant son bout inférieur pointu pour être enfoncé et étant muni à son bout supérieur d'un capot protecteur ainsi que, s'il y a lieu, d'éléments de raccord pour des piles en tant qu'éléments d'alimentation en énergie et le générateur d'oscillations étant équipé d'un élément de ressort, caractérisée par le fait que le pal est réalisé sous forme d'un oscillateur ultrasonique de résonance comme tube en aluminium (4) recevant un module fonctionnel électronique (10) en tant qu'électronique de commande, que le capot protecteur est réalisé comme élément de tête imperméable (3) et reçoit les piles (7) ainsi qu'un interrupteur (8) manœuvrable de l'extérieur, le générateur d'oscillations étant muni à l'intérieur du bout inférieur du tube (4) en tant qu'élément de ressort fixé d'un bout et muni d'un aimant permanent (19) à son autre bout oscillant librement au plan de l'axe du tube d'un ressort à lames (17) dont le bout oscillant librement (16) est placé à distance devant un pôle (15) d'une bobine d'électro-aimant (13) à noyau de fer doux (14) activable à l'aide d'un oscillateur rétroactif (31) du module fonctionnel (10) à une fréquence de résonance entre 400 et 500 hertz du ressort à lames (17) et que l'oscillateur rétroactif (31) peut être tourné et coupé à l'aide d'un générateur C-MOS à commande numérique (32) du module fonctionnel (10) en raison de 1 à 8.

2. Installation d'après la revendication numéro 1, caractérisée par le fait que le tube en aluminium (4) est fermé de manière pointue à son bout inférieur et qu'à l'extérieur il présente une rainure allant à la manière d'un filet du bout jusqu'à la partie de tête.

3. Installation d'après la revendication numéro 1, caractérisée par le fait que dans le bout inférieur du tube en aluminium (4) est insérée fermement et densément une pointe en matière synthétique dure (20) essentiellement en forme de cône et munie d'un gros filetage extérieur (21) en tire-bouchon, dépassant radialement le tube en aluminium (4) au bout supérieur.

4. Installation d'après les revendications numéros 1 à 3, caractérisée par le fait que l'élément de tête (3) est constitué par une coupe de base (22) fixée au bout supérieur du tube en aluminium (4) et un couvercle (23) s'élargissant en forme de cloche vers le bas et plat en haut dont le bord inférieur dépasse le bord supérieur de la coupe de base vers le bas et vers l'extérieur en tant que bord paragoutte (24), que des boîtes filetées (26) sont prévues dans le bord de la coupe de base (22) pour les vis d'arrêt manœuvrables d'en bas et servant à fixer le couvercle, que le couvercle (23) et la coupe de base (22) présentent des creux (25) correspondants à l'intérieur ainsi que des pièces de contact enlacées pour quatre petits éléments 1,5 V (7) et que l'interrupteur (8) se trouve dans la partie plate supérieure du couvercle sous un recouvrement en matière synthétique (9) flexible et imperméable.

5. Installation d'après les revendications numéros 1 à 4, caractérisée par le fait que le couvercle (23) et la coupe de base (22) ont une vue en plan circulaire sur la circonférence de laquelle sont réparties à distance mutuelle égale quatre dentelures (27) en coupe à peu près en arc de cercle, orientées à plomb.

Fig:2

Fig:3

Fig:1

FIG.4

FIG.5

Fig.6